Europäisches Patentamt

European Patent Office

Office européen des brevets

(19)

(11) **EP 1 186 459 A1**

(12) **EUROPÄISCHE PATENTANMELDUNG**

| | |
|---|---|
| (43) Veröffentlichungstag:<br>**13.03.2002 Patentblatt 2002/11** | (51) Int Cl.⁷: **B60K 31/00**, B62D 11/04,<br>B62D 11/24 |

(21) Anmeldenummer: **01121556.3**

(22) Anmeldetag: **10.09.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **11.09.2000 US 659250**

(71) Anmelder: **DEERE & COMPANY**
**Moline, Illinois 61265-8098 (US)**

(72) Erfinder: **Roming, Bernard Edwin**
**Illinois City, Illinois 61259 (US)**

(74) Vertreter: **Magin, Ludwig Bernhard et al**
**Deere & Company**
**European Office**
**Patent Department**
**68140 Mannheim (DE)**

(54) **Geschwindigkeitssteuerung und Fahrzeug**

(57) Bekannte Geschwindigkeitssteuerungen sind aufwendig und insbesondere für Fahrzeuge mit einem sogenannten Null-Wenderadius bzw. der Fähigkeit auf der Stelle bzw. zumindest im wesentlichen auf der Stelle zu wenden, ungeeignet.

Es wird daher eine Geschwindigkeitssteuerung vorgeschlagen, welche Geschwindigkeitssteuersignale für antreibbare Räder (141,143) eines Fahrzeugs in Abhängigkeit von Fahrzeugkonstanten sowie einem Geschwindigkeitssteuersignal, welche von einer durch eine Bedienungsperson betätigbare Geschwindigkeitssteuerelement (128) abhängig ist, bestimmt. Darüber hinaus wird ein Fahrzeug mit einer solchen Geschwindigkeitssteuerung vorgeschlagen.

Fig.4

EP 1 186 459 A1

**Beschreibung**

Die Erfindung betrifft eine Geschwindigkeitssteuerung für ein Fahrzeug mit wenigstens einem Lenkelement, einem Geschwindigkeitssteuerelement, lenkbaren Rädern und antreibbaren Rädern, mit einem Lenkwinkelsensor zur Ermittlung der Stellung des Lenkelements und zur Erzeugung eines Lenkwinkelsignals sowie ein Fahrzeug.

Die US-A-5,805,449 zeigt ein Steuerungssystem für ein Fahrzeug, welches mit einer Radschlupfsteuerung kombiniert ist, um das Fahrzeug zu stabilisieren. Wenn die Radschlupfsteuerung in Betrieb ist, wird ein dem Schlupf der angetriebenen Räder entsprechendes Signal an das Fahrzeugsteuerungsystem übermittelt. In Abhängigkeit von diesem Signal überschreibt das Steuerungssystem eine Konstante und erzeugt eine Steuersignal zur Steuerung der Fahrzeugbewegung in Abhängigkeit von dieser Konstanten.

Die der Erfindung zugrunde liegende Aufgabe wird darin gesehen, eine Geschwindigkeitssteuerung für ein Fahrzeug mit antreibbaren Rädern und von diesen unabhängigen lenkbaren Rädern zur Verfügung zu stellen.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Geschwindigkeitssteuerung zur Verfügung gestellt, welche die Geschwindigkeit der antreibbaren Räder eines Fahrzeugs steuert, welches ein durch eine Bedienungsperson betätigbares Lenkelement, wie beispielsweise ein Lenkrad oder einen Joy-Stick, ein durch eine Bedienungsperson betätigbares Geschwindigkeitssteuerelement, sowie lenkbare und antreibbare Räder aufweist. Die Geschwindigkeitssteuerung weist einen Lenkwinkelsensor, welcher mit dem Lenkelement in Verbindung steht und ein Lenkwinkelsignal erzeugt, einen Geschwindigkeitssensor, welcher mit dem Geschwindigkeitselement in Verbindung steht und ein Geschwindigkeitssteuersignal erzeugt, und eine Steuereinheit auf. Die Steuereinheit erzeugt Signale zur Steuerung der antreibbaren Räder als eine Funktion des Lenkwinkelsignals, eines Radstandes des Fahrzeugs, eines Abstandes zwischen den antreibbaren Rädern und dem Geschwindigkeitssteuersignal. Die Höhe des Geschwindigkeitssteuersignals wird durch einen berechneten Grenzwert limitiert, welcher eine Funktion des Radstandes des Fahrzeugs, eines Abstandes einer Achse eines antreibbaren Rades zu dem Schwerpunkt des Fahrzeugs nach vorn, eines Wertes, der eine maximal zulässige Zentripetalbeschleunigung repräsentiert, und des Lenkwinkelsignals darstellt. Die Geschwindigkeitssteuerung reduziert automatisch die Geschwindigkeit, wenn das Fahrzeug in eine scharfe Kurve einfährt, wodurch die Gefahr eines seitlichen Kippens reduziert wird, ohne die Fahrgeschwindigkeit noch den Kurvenradius zu gefährden. Diese Geschwindigkeitssteuerung kann an Fahrzeugen, welche einen sogenannten Null-Wenderadius aufweisen bzw. mit der Fähigkeit, vollständig oder zumindest im wesentlichen auf der Stelle zu drehen, eingesetzt werden, da die Geschwindigkeitssteuersignale entsprechend einer Berechnung bestimmt werden, welche kein Division durch den Wert eines Kurvenradius erfordert.

In der Zeichnung ist ein nachfolgend näher beschriebenes Ausführungsbeispiel der Erfindung dargestellt. Es zeigt:

Fig. 1      eine perspektivische Darstellung einer Lenkeinrichtung,

Fig. 2      eine Ansicht der Lenkeinrichtung aus Fig. 1 von oben,

Fig. 3      eine Ansicht der Lenkeinrichtung aus Fig. 1 von rückwärts betrachtet,

Fig. 4      eine schematische Darstellung einer Geschwindigkeitssteuerung zur Steuerung von angetriebenen Rädern eines Fahrzeugs mit einer Lenkeinrichtung entsprechend Fig. 1 und

Fig. 5      ein Flussdiagramm eines Algorithmus, der durch die Geschwindigkeitssteuerung aus Fig. 4 ausgeführt wird.

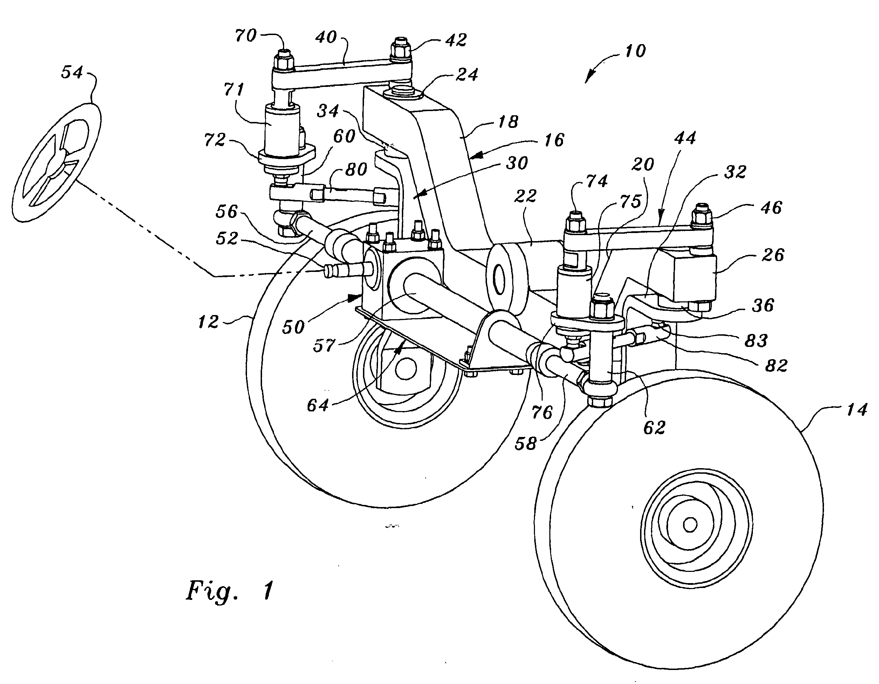

Es wird auf die Figuren 1 - 3 Bezug genommen, in denen eine Lenkeinrichtung 10 für lenkbare vordere Räder 12 und 14 eines Fahrzeugs, wie eines Rasenmähers oder Schwadlegers etc., zur Verfügung gestellt wird. Die Lenkeinrichtung 10 weist eine Achse 16 mit einem linken Arm 18 und einem rechten Arm 20 auf, welche sich von einem zentralen Schwenkelement 22, welches um eine zentrale, sich in Längsrichtung erstreckende Achse 16 schwenkbar ist, nach außen abstehen.

Die linken und rechten vorderen Räder 12, 14 sind mit dem unteren Enden entsprechender, im wesentlichen C-förmiger, linker und rechter halber Radgabeln 30 und 32 drehbar verbunden. Jede halbe Radgabel 30, 32 weist einen Zapfen 34, 36 auf, welcher sich von einem oberen Ende dazu nach oben erstreckt. Der Zapfen 34 wird durch eine Bohrung in einem äußeren Endbereich 24 des linken Arms 18 drehbar aufgenommen. Der Zapfen 36 wird drehbar durch eine Bohrung in einem äußeren Endbereich 26 des rechten Arms 20 aufgenommen.

Eine linke Schwinge 40 ist um einen Zapfen 42 drehbar, welcher fest in einer Bohrung in dem äußeren Endbereich 24 des linken Arms 18 angebracht und mit Bezug auf den Zapfen 34 nach vorne und seitlich außen versetzt angeordnet ist. Eine rechte Schwinge 44 ist um einen Zapfen 46 drehbar, welcher in einer Bohrung in dem äußeren Endbereich 26 des rechten Arms 20 befestigt ist, und ist mit Bezug auf den Zapfen 36 nach vorn und seitlich außen versetzt angeordnet.

An der Achse 16 ist ein üblicher Zahnstangenzusammenbau 50 angebracht, welcher eine Lenkeingangswelle 52 umfasst, welche mit einem Lenkrad bzw. einem Lenkelement 54 des Fahrzeugs verbunden ist. Ein (nicht gezeigtes) Zahnstangenelement bzw. ein Lenkmittel ist in einem ortsfesten Gehäuse 57 verschiebbar angeordnet und weist linke und rechte Endbereiche 56 und 58 auf, welche sich seitlich von gegenüberliegenden Endbereichen des Gehäuses 57 nach außen erstrecken. Ein linker, vertikaler Zapfen 60 weist einen unteren Endbereich, welcher drehbar mit dem linken Endbereich 56 des Lenkmittels verbunden ist, und ein rechter vertikaler Zapfen 62 einen unteren Endbereich auf, welcher drehbar mit dem rechten Endbereich 58 des Lenkmittels verbunden ist. Eine Konsole 64 trägt das Gehäuse 57 und ist mit der Achse 16 verbunden.

Die linke Schwinge 40 ist an einem oberen Endbereich eines Zapfens 70 befestigt, welcher über (nicht gezeigte) Lager eine Hülse 71 drehbar trägt, welche an einem Endbereich eines Zapfens 72 befestigt ist. Die rechte Schwinge 44 ist mit einem oberen Endbereich eines Zapfens 74 verbunden, welcher über (nicht gezeigte) Lager, eine Hülse 75 drehbar trägt, welche an einem Endbereich einer Spurstange bzw. eines Schwenkhebels 76 befestigt ist. Der obere Endbereich des einen vertikalen Zapfens 60 ist mit dem anderen Endbereich der Spurstange bzw. des Schwenkhebels 72 fest verbunden. Der obere Endbereich des vertikalen Zapfens 62 ist mit dem anderen Endbereich des Schwenkhebels 76 fest verbunden.

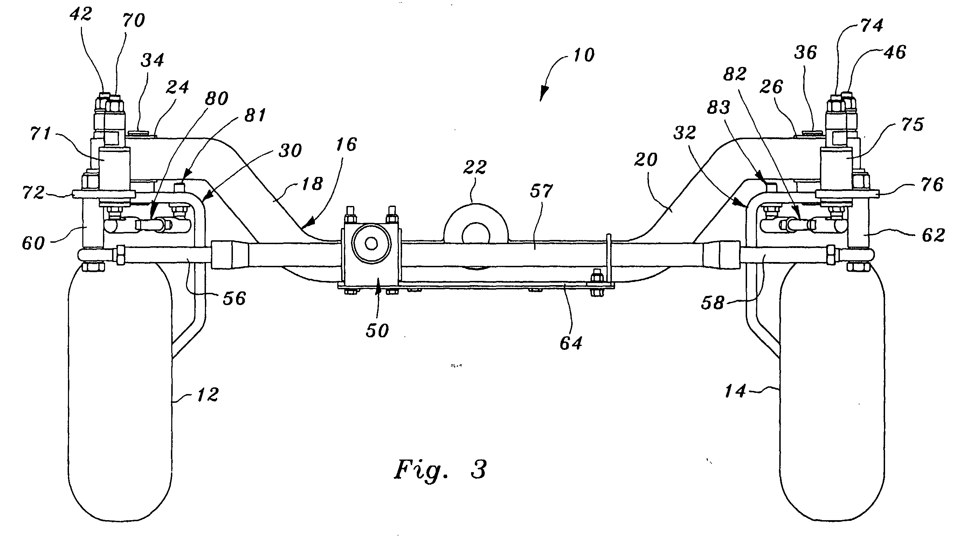

Eine linke Verbindungsstange 80 weist einen Endbereich, welcher drehbar mit dem unteren Endbereich des Zapfens 70 über ein Kugellager (nicht gezeigt) verbunden ist, und einen weiteren Endbereich auf, welcher drehbar mit dem oberen Endbereich der linken halben Radgabel 30 über einen Bolzen 81 verbunden ist. Eine rechte Verbindungsstange 82 weist einen Endbereich, der mit dem unteren Endbereich des Zapfens 74 über ein Kugellager (nicht gezeigt) verbunden ist, und einen anderen Endbereich auf, welcher mit dem oberen Endbereich der rechten, halben Radgabel 32 über einen Bolzen 83 verbunden ist. Wie es am besten in Fig. 3 gesehen werden kann, ist jeder der Bolzen 81, 83 mit Bezug auf den entsprechenden Zapfen 34, 36 nach innen versetzt angeordnet.

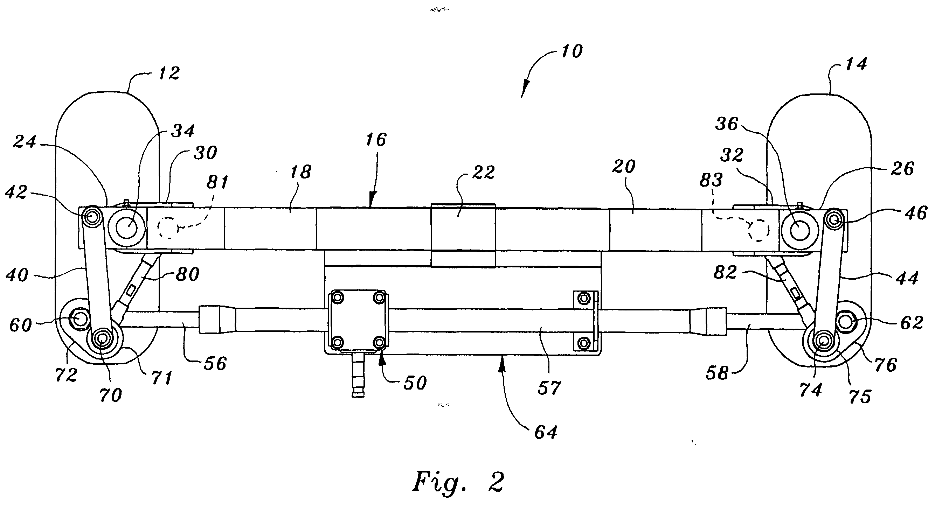

Wie es am besten in Fig. 2 gesehen werden kann, ist der Zapfen 70 innen und im Rücken des Zapfens 60 angeordnet, wenn die Räder 12, 14 gerade ausgerichtet sind, und der Zapfen 74 ist innen und im Rük- ken des Zapfens 62 angeordnet.

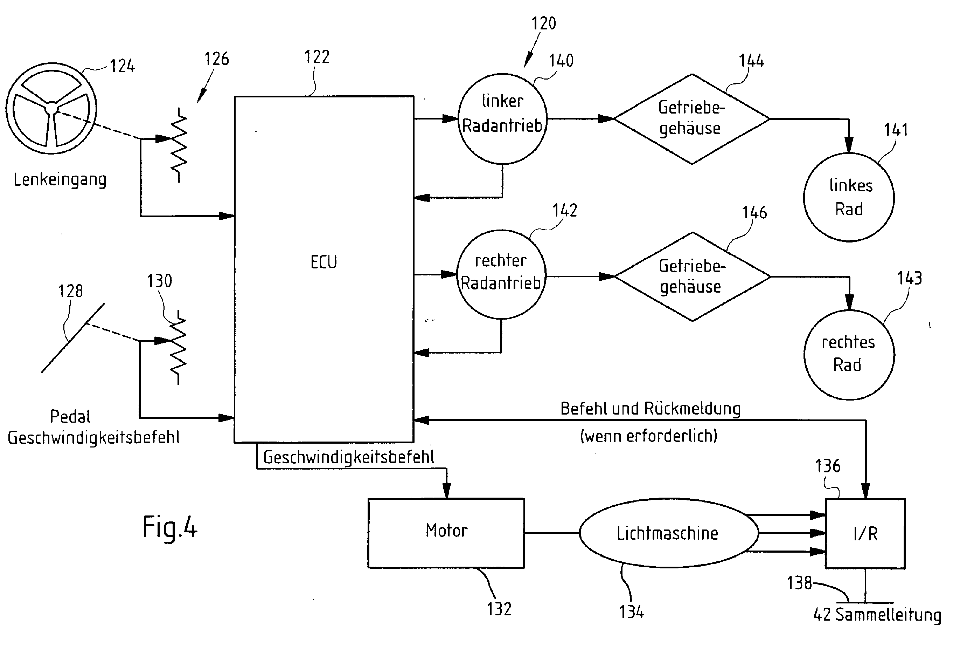

Mit Bezug auf Fig. 4 weist eine Geschwindigkeitssteuerung eine auf einem Mikroprozessor basierende elektronische Steuereinheit (ECU) 122 auf, welche durch eine Bedienungsperson gesteuerte Signale aufnimmt, einschließlich eines von einem Lenkrad bzw. Lenkelement 124 vorgegebenen Lenkwinkelsignals über einen Lenkelementwandler bzw. einen Lenkwinkelsensor 126 und ein Geschwindigkeitssteuerungssignal von einem Pedal bzw. einem Geschwindigkeitssteuerelement 128 über einen Pedalwandler bzw. einen Geschwindigkeitssensor 130. Die Steuereinheit 122 liefert ein Geschwindigkeitssteuersignal an einen Verbrennungsmotor 132. Der Verbrennungsmotor 132 treibt eine Lichtmaschine 134 an, welche Strom an einen Wechselrichter/Gleichrichter 136 liefert, welcher Gleichstrom an eine Gleichstromsammelleitung 138 liefert. Linke und rechte angetriebene Radantriebsmotoren 140 und 142 empfangen Strom von der Sammelleitung 138 und empfangen Steuersignale von der Steuereinheit 122. Der Radmotor 140 treibt das linke antreibbare Rad 141 über ein Getriebegehäuse 144 und der Motor 142 treibt das rechte antreibbare Rad 142 über ein Getriebegehäuse 146 an. Der abgegebenen Lenkwinkel ist der Winkel über den ein hypothetisches zentrales Vorderrad gedreht werden müsste, um zu bewirken, dass ein Dreirad dem gleichen Wenderadius folgt. Vorzugsweise ist die Verschiebung des Lenkelements (nicht gezeigt) der Lenkeinrichtung 10 ebenfalls proportional zu diesem Wert vorgesehen.

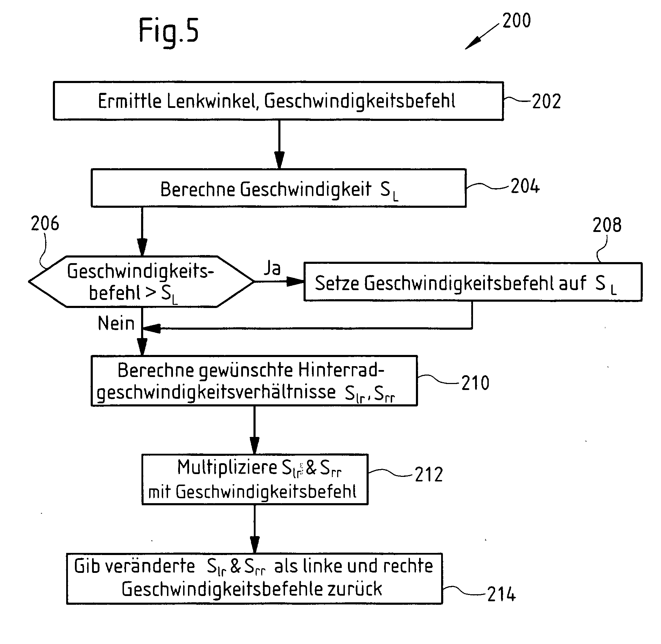

Die Steuereinheit 122 führt einen Algorithmus 200 aus, wie er in Fig. 5 dargestellt wird. Die Übertragung des oben genannten Flussdiagramms in eine übliche Programmiersprache zur Implementierung des Algorithmus, der durch das Flussdiagramm beschrieben wird, in einen Digitalcomputer oder einen Mikroprozessor wird für den normalen Fachmann offensichtlich sein. Schritt 202 nimmt die aktuellen Werte des Lenkwinkels von dem Lenkumsetzer bzw. Lenkwinkelsensor 126 und des Geschwindigkeitssteuerbefehls von dem Pedalumsetzer bzw. Geschwindigkeitselementsensor 130 auf.

Schritt 204 berechnet einen Geschwindig- keitsgrenzwert, $S_1$, entsprechend der folgenden Glei- chung:

$$S_l = \frac{\sqrt{A_{max} W^2 \left(1 + \cot^2 |\theta_s|\right)}}{\sqrt[4]{Y_{cg}^2 + W^2 \cot^2 |\theta_s|}}$$

wobei W der Radstand des Fahrzeugs, $Y_{cg}$ der Abstand einer Achse eines antreibbaren Rades (nicht gezeigt) von dem Schwerpunkt (nicht gezeigt) des Fahrzeugs nach vorn, $A_{max}$ einen Wert, der die gewünschte maxi- mal zulässige Zentripetalbeschleunigung des Fahr- zeugs wiedergibt, und $\theta_s$ den Lenkwinkel von dem Lenkwinkelsensor 126 darstellt, wobei Null Geradeausfahrt und ein positiver Wert eine Drehung der vorderen Räder 12, 14 bei einer Betrachtung des Fahrzeugs von oben im Gegenuhrzeigersinn wiedergibt.

$A_{max}$ ist vorzugsweise als eine Funktion der bestimmten Charakteristika des Fahrzeugs, wie des Gewichts und der Gestalt, bestimmt, und wird derart gewählt, so dass die Möglichkeit, dass das Fahrzeug bei einer zu schnellen Ausführung einer Kurve kippt, reduziert und ein ausreichender Komfort für eine Bedienungsperson zur Verfügung gestellt wird.

Schritt 206 vergleicht den Geschwindigkeitssteuerbefehl von dem Geschwindigkeitselementsensor 130 mit $S_1$ und Schritt 208 setzt den Geschwindigkeitssteuerbefehl auf den Wert $S_1$, wenn der Geschwindigkeitssteuerbefehl größer ist als der Wert $S_1$.

Als nächstes berechnet der Schritt 210 den Wert eines gewünschten Radgeschwindigkeitsverhältnisses $S_{lr}$ und eines gewünschten rechten Radgeschwindigkeitsverhältnisses $S_{rr}$ entsprechend der folgenden Gleichungen:

$$S_{lr} = \cos\theta_s - \frac{T_r \sin\theta_s}{2W} \qquad S_{rr} = \cos\theta_s + \frac{T_r \sin\theta_s}{2W}$$

wobei $T_r$ die Laufläche des angetriebenen Rades oder den Abstand der Mittellinien der angetriebenen Räder angibt.

Schritt 212 berechnet die linken und rechten Geschwindigkeitssteuerbefehle durch Multiplizieren von $S_{lr}$ und $S_{rr}$ mit dem Geschwindigkeitssteuerbefehl des Geschwindigkeitselementsensors 130.

Abschließend gibt Schritt 212 den Geschwindigkeitssteuerbefehl aus Schritt 212 an die Steuereinheit 122 zurück, so dass die Motoren 140 und 142 entsprechend gesteuert werden können. Folglich werden als Ergebnis der Schritte 202 - 214 die Geschwindigkeiten der angetriebenen Räder als eine Funktion des Lenkwinkels und der gewünschten Geschwindigkeit und nicht als Funktion des Wertes des Kurvenradius berechnet. Dies vermeidet ein Teilen durch Null im Fall eines Wendens auf der Stelle (Null-Radius Wende).

Die Geschwindigkeitssteuerung berechnet auch eine Maximalgeschwindigkeit oder einen Geschwindigkeitsgrenzwert, der einen vorgegebene Zentripetalbeschleunigungswert als eine Funktion des Lenkwinkels nicht übersteigt. Dieser Geschwindigkeitsgrenzwert wird auf den Geschwindigkeitssteuerbefehl angewandt, der durch das Geschwindigkeitssteuerelement 128 erzeugt wird, wodurch eine Geschwindigkeitsreduzierung erzwungen wird, wenn die Lenkung eingeschlagen ist. Die resultierende Geschwindigkeitssteuerung hält den Eindruck eines üblichen Ackermann-gesteuerten Fahrzeug mit einer Differentialachse der Antriebsräder aufrecht, wird aber die Geschwindigkeit bei Geradeausfahrt auf einen geringeren Wert reduzieren als dem der einer Maximaldrehzahl eines elektrischen Motors entspricht.

Mit dieser Geschwindigkeitssteuerung kann eine gleichbleibende Geschwindigkeit in der Mitte der Vorderachse aufrechterhalten werden und es werden einfache Berechnungen verwendet, um die Geschwindigkeit der angetriebenen Räder als eine Funktion des vorgegebenen Lenkwinkels zu berechnen. Zusätzlich kann die Geschwindigkeitssteuerung die Fahrzeuggeschwindigkeit automatisch reduzieren, wenn das Fahrzeug in eine scharfe Kurve eintritt. Dieses System ist an einem weiten Bereich von Fahrzeugen aller Größen, wie an Mähdreschern, Schwadlegern, großen landwirtschaftlichen Traktoren, Baggern, Rasentraktoren und kommerziellen Rasenpflegegeräten einsetzbar. Diese Geschwindigkeitssteuerung stellt zusammen mit der Lenkeinrichtung eine Richtungsstabilität in nach seitwärts abfallendem Gelände zur Verfügung.

Während die vorliegende Erfindung in Verbindung mit einer bestimmten Ausführungsform beschrieben wurde, ist es klar, dass viele Alternativen, Modifikationen und Variationen für den Fachmann im Lichte der vorstehenden Beschreibung offensichtlich sein werden. Entsprechend ist es beabsichtigt, dass die Erfindung alle solchen Alternativen, Modifikationen und Variationen, welche in den Geist und den Schutzbereich der folgenden Ansprüche fallen, umfassen sollen.

**Patentansprüche**

1. Geschwindigkeitssteuerung für ein Fahrzeug mit wenigstens einem Lenkelement (124), einem Geschwindigkeitssteuerelement (128), lenkbaren Rädern (12, 14) und antreibbaren Rädern (141, 142), mit einem Lenkwinkelsensor (126) zur Ermittlung der Stellung des Lenkelements (124) und zur Erzeugung eines Lenkwinkelsignals, **gekennzeichnet durch** einen Geschwindigkeitselementsensor (130) zur Ermittlung der Stellung des Geschwindigkeitssteuerelements (128) und zur Erzeugung eines Geschwindigkeitssteuersignals und einer Steuereinheit (122) zur Erzeugung eines Befehls zur Steuerung der Antriebsgeschwindigkeit der antreibbaren Räder (141, 142) als einer Funktion des Lenkwinkelsignals, eines Radstandes des Fahrzeugs, eines Abstand zwischen den antreibbaren Rädern (141, 142) und des Geschwindigkeitssteuersignals.

2. Geschwindigkeitssteuerung nach Anspruch 1, **dadurch gekennzeichnet, dass** der Befehl zur Steuerung der Antriebsgeschwindigkeit durch einen berechneten Grenzwert beschränkt wird.

3. Geschwindigkeitssteuerung nach Anspruch 2, **dadurch gekennzeichnet, dass** der berechnete Grenzwert eine Funktion eines die maximale zulässige zentripetale Beschleunigung des Fahrzeugs wiedergebenden Wertes darstellt.

4. Geschwindigkeitssteuerung nach Anspruch 2 oder 3, **dadurch gekennzeichnet**, das der berechnete Grenzwert eine Funktion des Radstandes des Radstandes des Fahrzeugs, eines Abstandes einer Achse der antreibbaren Räder (141, 142) des Fahrzeugs von einem Schwerpunkt des Fahrzeugs nach vorne, eins Wertes, der die maximale zulässige Zentripetalbeschleunigung des Fahrzeugs repräsentiert, und des Lenkwinkelsignals bildet.

5. Geschwindigkeitssteuerung nach einem oder mehreren der vorherigen Ansprüche, **dadurch gekennzeichnet, dass** der Grenzwert ($S_l$) entsprechend der Gleichung

$$S_l = \frac{\sqrt{A_{\max}W^2\left(1+\cot^2|\theta_s|\right)}}{\sqrt[4]{Y_{cg}^2 + W^2\cot^2|\theta_s|}}$$

berechnet wird, wobei W dem Radstand des Fahrzeugs, $Y_{cg}$ dem Abstand einer Achse eines antreibbaren Rades von dem Schwerpunkt des Fahrzeugs, $A_{\max}$ einem die maximal zulässige Zentripetalbeschleunigung des Fahrzeugs wiedergebenden Wert und $\theta_s$ dem Lenkwinkelsignal entspricht

6. Geschwindigkeitssteuerung nach Anspruch 5, **dadurch gekennzeichnet**, das $A_{\max}$ als eine Funktion von Gewicht und Abmaßen des Fahrzeugs bestimmt wird.

7. Geschwindigkeitssteuerung nach einem oder mehreren der vorherigen Ansprüche, **dadurch gekennzeichnet, dass** das Geschwindigkeitssteuersignal eine Funktion eines linken Geschwindigkeitsverhältnswerts $S_{lr}$ darstellt, welcher entsprechend der Gleichung

$$S_{lr} = \cos\theta_s - \frac{T_r\sin\theta_s}{2W}$$

berechnet wird, wobei $T_r$ dem Abstand zwischen Mittellinien der antreibbaren Räder (141, 142), W dem Radstand des Fahrzeugs und $\theta_s$ dem Lenkwinkel entspricht.

8. Geschwindigkeitssteuerung nach einem oder mehreren der vorherigen Ansprüche, **dadurch gekennzeichnet, dass** das Geschwindigkeitssteuersignal eine Funktion eines linken Geschwindigkeitsverhältnswerts $S_{rr}$ darstellt, welcher entsprechend der Gleichung

$$S_{rr} = \cos\theta_s + \frac{T_r\sin\theta_s}{2W}$$

berechnet wird, wobei $T_r$ dem Abstand zwischen Mittellinien der antreibbaren Räder (141, 142), W dem Radstand des Fahrzeugs und $\theta_s$ dem Lenkwinkel entspricht.

9. Geschwindigkeitssteuerung nach einem oder mehreren der vorherigen Ansprüche, **gekennzeichnet durch** eine elektronische Steuereinheit (122).

10. Fahrzeug mit einem Lenkelement (124), einer Geschwindigkeitssteuerelement, lenkbaren Rädern (12, 14) und antreibbaren Rädern (141, 142) mit einer Geschwindigkeitssteuerung nach einem oder mehreren der vorherigen Ansprüche.

11. Fahrzeug nach Anspruch 10, **gekennzeichnet durch** eine Lenkeinrichtung (10), die die lenkbaren Räder (12, 14) in einem Bereich von zumindest im wesentlichen 180° verstellen kann.

Fig. 1

*Fig. 2*

EP 1 186 459 A1

Fig. 3

8

EP 1 186 459 A1

linkes Rad — 141

rechtes Rad — 143

Getriebe-gehäuse — 144

Getriebe-gehäuse — 146

120

linker Radantrieb — 140

rechter Radantrieb — 142

Befehl und Rückmeldung (wenn erforderlich)

I/R — 136

Sammelleitung — 42
138

Lichtmaschine — 134

122 — ECU

Motor — 132

Geschwindigkeitsbefehl

126

124

Lenkeingang

130

128

Pedal
Geschwindigkeitsbefehl

Fig.4

# Fig.5

200

Ermittle Lenkwinkel, Geschwindigkeitsbefehl ── 202

Berechne Geschwindigkeit $S_L$ ── 204

206

208

Geschwindigkeitsbefehl $> S_L$   ── Ja ──   Setze Geschwindigkeitsbefehl auf $S_L$

Nein

Berechne gewünschte Hinterradgeschwindigkeitsverhältnisse $S_{lr}, S_{rr}$ ── 210

Multipliziere $S_{lr}$ & $S_{rr}$
mit Geschwindigkeitsbefehl ── 212

Gib veränderte $S_{lr}$ & $S_{rr}$ als linke und rechte
Geschwindigkeitsbefehle zurück ── 214

**Europäisches Patentamt**

## EUROPÄISCHER RECHERCHENBERICHT

Nummer der Anmeldung

EP 01 12 1556

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 354 568 A (GRIESENBROCK KARL-HEINZ) 19. Oktober 1982 (1982-10-19) | 1-4,9,10 | B60K31/00 B62D11/04 |
| Y | * Spalte 2, Zeile 39 - Spalte 3, Zeile 10; Abbildung 1 * | 11 | B62D11/24 |
| Y | FR 1 038 617 A (M. DUFOUR) 30. September 1953 (1953-09-30) * Abbildung 4 * | 11 | |
| A | DE 41 33 060 A (MANNESMANN AG) 8. April 1993 (1993-04-08) * Spalte 11, Zeile 63 - Spalte 12, Zeile 28; Abbildung 3 * | 1-6,9,10 | |

**RECHERCHIERTE SACHGEBIETE (Int.Cl.7)**

B60K
B62D

Der vorliegende Recherchenbericht wurde für alle Patentansprüche erstellt

| Recherchenort | Abschlußdatum der Recherche | Prüfer |
|---|---|---|
| BERLIN | 17. Dezember 2001 | Wiberg, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 12 1556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 4354568 | A | 19-10-1982 | DE | 2909667 A1 | 18-09-1980 |
| | | | FR | 2451290 A1 | 10-10-1980 |
| | | | GB | 2045969 A ,B | 05-11-1980 |
| FR 1038617 | A | 30-09-1953 | KEINE | | |
| DE 4133060 | A | 08-04-1993 | DE | 4133060 A1 | 08-04-1993 |
| | | | BR | 9206576 A | 07-11-1995 |
| | | | CN | 1074869 A | 04-08-1993 |
| | | | WO | 9307021 A1 | 15-04-1993 |
| | | | DE | 59206508 D1 | 11-07-1996 |
| | | | EP | 0606345 A1 | 20-07-1994 |
| | | | ES | 2088156 T3 | 01-08-1996 |
| | | | JP | 6511136 T | 08-12-1994 |
| | | | JP | 3096476 B2 | 10-10-2000 |
| | | | MX | 9205689 A1 | 01-07-1993 |

EPO FORM P0461

Für nähere Einzelheiten zu diesem Anhang : siehe Amtsblatt des Europäischen Patentamts, Nr.12/82